(19)

Europäisches
Patentamt
European
Patent Office
Office européen
des brevets

(11) **EP 2 523 024 A1**

(12) **EUROPEAN PATENT APPLICATION**

(43) Date of publication:
**14.11.2012  Bulletin 2012/46**

(51) Int Cl.:
***G02B 6/00*** (2006.01)

(21) Application number: **12167210.9**

(22) Date of filing: **09.05.2012**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **10.05.2011  JP 2011105621**

(71) Applicant: **Funai Electric Co., Ltd.
Daito-shi,
Osaka 574-0013 (JP)**

(72) Inventor: **Tsuji, Hirohiko
Daito-shi, Osaka 574-0013 (JP)**

(74) Representative: **Grünecker, Kinkeldey,
Stockmair & Schwanhäusser
Leopoldstrasse 4
80802 München (DE)**

(54) **Backlight unit and liquid crystal module**

(57)     A backlight unit includes a light source unit and a light guide plate. The light source unit emits light. The light guide plate includes a first end surface and a second end surface. The first end surface faces with the light source unit. The second end surface has first and second inclined faces. A first total internal reflection of the light that is incident from the light source unit onto one of the first and second inclined faces occurs at the one of the first and second inclined faces. A second total internal reflection of the light that is reflected at the one of the first and second inclined faces and is incident onto the other of the first and second inclined faces occurs at the other of the first and second inclined faces.

angle a = angle b = θ
angle c = angle e = (90° - θ)
angle d = 2 (90° - θ)
angle f = 180° - 3 (90° - θ) = (3θ - 90°)
angle g = angle h = 90° - (3θ - 90°) = (180° - 3θ)

*FIG. 1*

Printed by Jouve, 75001 PARIS (FR)

EP 2 523 024 A1

**Description**

CROSS-REFERENCE TO RELATED APPLICATIONS

This application claims priority to Japanese Patent Application No. 2011-105621 filed on May 10, 2011. The entire disclosure of Japanese Patent Application No. 2011-105621 is hereby incorporated herein by reference.

BACKGROUND

Field of the Invention

The present invention generally relates to a backlight unit. More specifically, the present invention relates to a backlight unit having a light guide plate.

Background Information

A typical conventional edge-lit backlight unit is built into a liquid crystal module. With the conventional edge-lit backlight unit, a light source is disposed along a light incident face at one end of a light guide plate. The light guide plate is made of a transparent synthetic resin. With the edge-lit backlight unit, light reflecting tapes are affixed to end faces other than the light incident face of the light guide plate such that light incident from the light incident face on the light guide plate will not be emitted from any end faces other than the light incident face of the light guide plate. Thus, most of the incident light is emitted from a light emitting face of the light guide plate, which improves light utilization efficiency.

Meanwhile, another conventional light guide plate for an edge-lit backlight unit has been proposed (see Japanese Laid-Open Patent Application Publication No. 2007-200741, for example). This light guide plate includes a surface relief structure having functions of reflecting and refracting part of the rectilinear component of light from a light source in the front or rear face direction of the light guide plate, and refracting and transmitting the other part. The surface relief structure is provided to a final end face opposite an end face of the light guide plate on which the light source is disposed.

Yet another conventional light guide plate has also been proposed (see Japanese Laid-Open Patent Application Publication No. 2003-315560, for example). With this light guide plate, a light take-off mechanism has numerous recess arrays with smooth, inclined faces with an inclination angle of 15° to 75° relative to the light source on a face of the light guide plate opposite a light emitting face.

Furthermore, yet another light guide plate has been proposed (Japanese Laid-Open Patent Application 2003-156632). With this light guide plate, an opposing side face of the light guide plate that is opposite a light incident face is an inclined face with an inner angle $\theta$ of less than 90° such that at least part of the light projected from a direction of the light incident face will be reflected non-parallel to a light emitting face. Furthermore, a reflecting layer made of an aluminum coating is formed on this inclined face.

SUMMARY

However, it has been discovered that when light utilization efficiency is increased by affixing the light reflecting tapes to the end faces other than the light incident face at the one end of the light guide plate, it is very hard to affix the light reflecting tapes to the thinner light guide plates in use today. Thus, the cost of the light reflecting tapes is added to the labor cost of affixing the light reflecting tapes, which drives up the cost of the product.

Also, when the surface relief structure is provided to the final end face opposite the end face of the conventional light guide plate on which the light source is disposed (see Japanese Laid-Open Patent Application Publication No. 2007-200741, for example), it is not easy to form the surface relief structure, the mold for forming the light guide plate is more expensive, and this again drives up the cost of the product.

Meanwhile, when the numerous recess arrays with the smooth, inclined faces are disposed on the face opposite the light emitting face (see Japanese Laid-Open Patent Application Publication No. 2003-315560, for example), light cannot be prevented from exiting the other end face opposite the light incident face at one end of the light guide plate. Thus, even when this technology is applied, the above-mentioned problem encountered with the conventional edge-lit backlight unit cannot be solved.

Furthermore, when the opposing side face of the light guide plate that is opposite the light incident face is an inclined face, and the reflecting layer made of the aluminum coating is formed on this inclined face (see Japanese Laid-Open Patent Application 2003-156632), it is not easy to form the reflective layer. Thus, this can lead to higher costs.

An improved backlight unit was conceived in light of the above-mentioned problem. One object of the present disclosure is to provide a backlight unit which allows light that is incident from a light incident face of a light guide plate to be emitted from a light emitting face of the light guide plate without providing a light reflecting tape.

In accordance with one aspect of the present disclosure, a backlight unit includes a light source unit and a light guide plate. The light source unit is configured to emit light. The light guide plate is arranged relative to the light source unit. The light guide plate includes a first end surface and a second end surface that is opposite the first end surface. The first end surface faces with the light source unit. The second end surface has first and second inclined faces. The first inclined face slopes away from the second inclined face as approaching the first end surface of the light guide plate. The second inclined face slopes away from the first inclined face as approaching the first end surface of the light guide plate. The first and second inclined faces are arranged relative to the first end surface of the light guide plate such that a first total internal reflection of the light that is incident from the light source unit onto one of the first and second inclined faces is configured to occur at the one of the first and second inclined faces, and such that a second total internal reflection of the light that is reflected at the one of the first and second inclined faces and is incident onto the other of the first and second inclined faces is configured to occur at the other of the first and second inclined faces.

These and other objects, features, aspects and advantages will become apparent to those skilled in the art from the following detailed description, which, taken in conjunction with the annexed drawings, discloses a preferred embodiment.

BRIEF DESCRIPTION OF THE DRAWINGS

Referring now to the attached drawings which form a part of this original disclosure:

FIG. 1 is a schematic diagram of an edge-lit backlight unit in accordance with one embodiment;

FIG. 2 is a front elevational view of the edge-lit backlight unit in accordance with one embodiment; and

FIG. 3 is a cross sectional view of a liquid crystal module including the edge-lit backlight unit illustrated in FIG. 2, taken along III-III line in FIG. 2.

DETAILED DESCRIPTION OF EMBODIMENTS

A preferred embodiment will now be explained with reference to the drawings. It will be apparent to those skilled in the art from these disclosures that the following descriptions of the preferred embodiment are provided for illustration only and not for the purpose of limiting the invention as defined by the appended claims and their equivalents.

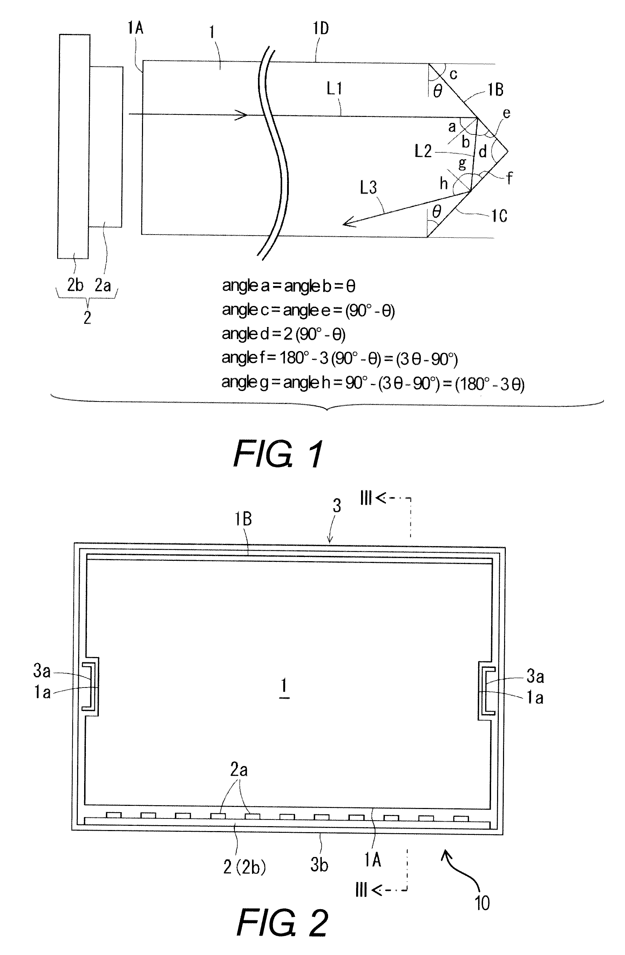

Referring to FIGS. 1 to 3, a liquid crystal module with a backlight unit 10 will now be described in detail. The backlight unit 10 is an edge-lit type backlight unit.

FIG. 1 is a schematic diagram of the edge-lit backlight unit 10, and FIG. 2 is a front elevational view of this edge-lit backlight unit 10. The backlight unit 10 basically includes a light guide plate 1, an LED bar 2 (e.g., light source unit), and a rear frame 3. The light guide plate 1 is a rectangular light guide plate made of acrylic resin (e.g., polymethyl methacrylate). This light guide plate 1 is housed in an interior of the rear frame 3. The LED bar 2 is also housed in the interior of the rear frame 3. The rear frame 3 is made of sheet metal and is in the form of a shallow box.

The light guide plate 1 includes a pair of recess components 1a on both sides of the light guide plate 1. Furthermore, the rear frame 3 has a pair of positioning-use bent tabs 3a. The positioning-use bent tabs 3a of the rear frame 3 are fitted into these recess components 1a, respectively, thereby positioning the light guide plate 1 in an up and down direction and in a left and right direction of the light guide plate 1. Gaps are provided between the recess components 1a and the bent tabs 3a in order to absorb thermal expansion and contraction of the light guide plate 1.

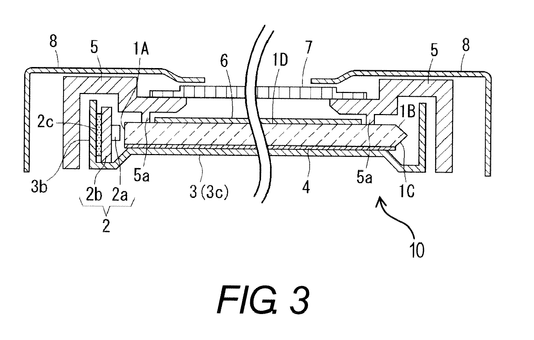

As shown in FIG. 2, the LED bar 2 has a plurality of (eleven in FIG. 2) LEDs 2a (e.g., light source elements) and a wiring board 2b. The LEDs 2a are arranged in a row on the wiring board 2b. The wiring board 2b has a rectangular shape. The wiring board 2b is disposed along a lower end face (e.g., first end surface) of the light guide plate 1 that is formed as a light incident face 1A of the light guide plate 1. The wiring board 2b is arranged relative to the light guide plate 1 such that a clearance between the LEDs 2a and the light incident face 1A of the light guide plate 1 is maintained. Thus, the LED bar 2 faces with the light incident face 1A of the light guide plate 1, and the LEDs 2a are arranged along the light incident face 1A of the light guide plate 1. The LED bar 2 emits light toward the light incident face 1A of the light guide plate 1. As shown in FIG. 3, the wiring board 2b of the LED bar 2 is adhesively bonded to an inner face of a lower side plate 3b of the rear frame 3 with a heat dispersing sheet 2c in between. The wiring board 2b of the LED bar 2 is a board with good thermal conductivity, with aluminum used as its core material. Thus, any heat generated by the LEDs 2a is conducted by the wiring board 2b and the heat dispersing sheet 2c, and can be efficiently dispersed from the lower side plate 3b and a rear plate 3c of the rear frame 3.

As shown in FIG. 3, the liquid crystal module has the backlight unit 10. Furthermore, the liquid crystal module has a light reflecting sheet 4, a molding frame 5, a plurality of optical sheets 6, a liquid crystal panel 7, and a bezel 8. The light reflecting sheet 4 is provided between the light guide plate 1 and the rear plate 3c of the rear frame 3. Thus, majority of the light incident from the LEDs 2a of the LED bar 2 onto the light guide plate 1 is emitted from a front end face of the light guide plate 1 that is formed as a light emitting face 1D of the light guide plate 1. A light reflective paint layer can be formed on a rear end face of the light guide plate 1 instead of providing the light reflecting sheet 4.

As shown in FIGS. 1 and 3, the other end face (e.g., second end surface or upper end face) of the light guide plate 1 that is opposite the light incident face 1A is formed as a curved surface in the shape of a triangular peak that protrudes to the outside. Specifically, as shown in FIG. 3, the other end face of the light guide plate 1 has a peaked cross sectional shape that protrudes away from the light incident face 1A of the light guide plate 1. The upper end face of the light guide plate 1 has a first inclined face 1B and a second inclined face 1C. The first inclined face 1B extends from the front end face of the light guide plate 1 to an interface between the first and second inclined faces 1B and 1C. The second inclined face 1C extends from the rear end face of the light guide plate 1 to the interface between the first and second inclined faces 1B and 1C. The first inclined face 1B slopes diagonally upward (i.e., forward of the liquid crystal module) toward the light incident face 1A of the light guide plate 1. The second inclined face 1C slopes diagonally downward (i.e., rearward of the liquid crystal module) toward the light incident face 1A of the light guide plate. In other words, the first inclined face 1B slopes away from the second inclined face 1C as approaching the light incident face 1A of the light guide plate 1. The second inclined face 1C slopes away from the first inclined face 1B as approaching the light incident face 1A of the light guide plate 1. Thus, the upper end face of the light guide plate 1 has a ridge that extends in the left and right direction of the light guide plate and is formed by the interface of the first and second inclined faces 1B and 1C. The ridge is located at a thickness center of the light guide plate. The first and second inclined faces 1B and 1C are arranged relative to the light incident face 1A of the light guide plate 1 such that a first total internal reflection of the light that is incident from the LED bar 2 onto one of the first and second inclined faces 1B and 1C occurs at the one of the first and second inclined faces 1B and 1C, and such that a second total internal reflection of the light that is reflected at the one of the first and second inclined faces 1B and 1C and is incident onto the other of the first and second inclined faces 1B and 1C occurs at the other of the first and second inclined faces 1B and 1C. More specifically, the inclination angle $\theta$ of the first inclined face 1B and the second inclined face 1C with respect to the light incident face 1A of the light guide plate 1 is set to be greater than the critical angle $\theta c$ of light refraction for a material of which the light guide plate 1 is made (e.g., polymethyl methacrylate), and to be less than an angle calculated by the following formula (180° - critical angle $\theta c$)/3 (i.e., $\theta c < \theta < (180° - \theta c)/3$). In particular, the critical angle $\theta c$ for the polymethyl methacrylate is 42° when the light passing from the polymethyl methacrylate into air. Thus, the inclination angle $\theta$ of the first inclined face 1B and the second inclined face 1C of this light guide plate 1 is set to be greater than 42° and less than 46°. Accordingly, when the light L1 is incident parallel to the light emitting face 1D from the light incident face 1A of the light guide plate 1, the light L1 can be reflected by the first inclined face 1B and the second inclined face 1C, and returned to the light guide plate 1. More specifically, the light L1 is directly incident from the LEDs 2a onto one of the first and second inclined faces 1B and 1C, and then the first total internal reflection of the light L1 occurs at the one of the first and second inclined faces 1B and 1C. The light L1 is reflected as the reflected light L2. Furthermore, the reflected light L2 is directly incident onto the other of the first and second inclined faces 1B and 1C, and then the second total internal reflection of the reflected light L2 occurs at the other of the first and second inclined faces 1B and 1C. The reflected light L2 is reflected as the reflected light L3. The reflected light L3 returns to the light guide plate 1. Therefore, the majority of the incident light can be emitted from the light emitting face 1D of the light guide plate 1. Accordingly, the light utilization efficiency can be increased and there is no cost of light reflecting tape or labor cost of affixing the light reflecting tape. Accordingly, the cost of the product can be reduced.

The above-mentioned effect is particularly pronounced with the edge-lit backlight unit 10 when the inclination angle $\theta$ of the first inclined face 1B and the second inclined face 1C of the light guide plate 1 is set to an optimal angle 45°.

The LED bar 2, in which the LEDs 2a are installed on the wiring board 2b, is used as the light source with the edge-lit backlight unit10. However, a cold cathode tube or another such linear light source can be installed along the light incident face 1A instead.

Also, the light guide plate 1 used in the edge-lit backlight unit 10 is made of an acrylic resin (e.g., polymethyl methacrylate) with excellent transparency. However, a light guide plate can of course be used which is made of some other synthetic resin with good transparency, such as a polycarbonate. When the light guide plate of different material from the polymethyl methacrylate, the inclination angle $\theta$ can be different from the angle described above since different materials has different critical angles $\theta c$.

As shown in FIG. 3, the molding frame 5 made of a synthetic resin is provided to four sides of the light guide plate 1 of the edge-lit backlight unit 10. The four peripheral edges of the light guide plate 1 are held down by hold-downs bumps 5a on a rear face of the molding frame 5. The optical sheets 6, such as a light diffusing sheet or a prism sheet, are laminated over the light emitting face 1D (e.g., front end face) of the light guide plate 1. The liquid crystal panel 7 is installed over this. Thus, the optical sheets 6 are disposed between the light guide plate 1 and the liquid crystal panel 7. Furthermore, the liquid crystal panel 7 is disposed forward of the liquid crystal module relative to the light guide plate 1. This liquid crystal panel 7 is supported by inner peripheral edges of the molding frame 5. The four sides of the rear frame 3 and the liquid crystal panel 7 are surrounded and covered by the bezel 8 to complete the assembly of the liquid crystal module.

Although not shown in the drawings, an X-board is connected to the end of the liquid crystal panel 7 via a chip-on-film carrying a source driver IC chip, and a Y-board is connected via a chip-on-film carrying a gate driver IC chip.

With this liquid crystal module, the rear face of the liquid crystal panel 7 is brightly illuminated by the edge-lit backlight unit 10. Thus, the brightness of the display face is increased and a clear image can be viewed.

With this edge-lit backlight unit 10 of the liquid crystal module, most of the light incident from the light incident face 1A at one end of the light guide plate 1 is reflected by the other end face and can be emitted from the light emitting face 1D of the light guide plate 1, without having to affix any light reflecting tapes on the other end face opposite the light incident face 1A at one end of the light guide plate 1.

With this edge-lit backlight unit 10, the other end face opposite the light incident face 1A at one end of the light guide plate 1 is formed as a curved surface with a specific triangular peaked shape, which allows most of the light that is incident from the light incident face 1A of the light guide plate 1 and reaches the other end face to be returned to the light guide plate 1 and emitted from the light emitting face 1D.

With the edge-lit backlight unit 10, the LED bar 3 is disposed along the light incident face 1A at one end of the light guide plate 1. The other end face opposite the light incident face 1A at one end of the light guide plate 1 is formed as a curved surface in the shape of a triangular peak that protrudes to the outside. The other end face has the first inclined face 1B that slopes diagonally upward toward the light incident face 1A at one end of the light guide plate 1, and the second inclined face 1C that slopes diagonally downward toward the light incident face 1A at one end of the light guide plate1. The inclination angle $\theta$ of the first inclined face 1B and the second inclined face 1C with respect to the light incident face 1A at one end of the light guide plate 1 is set to be greater than the critical angle $\theta c$ of light refraction for the resin material that makes up the light guide plate 1, and to be less than (180° - critical angle $\theta c$)/3.

Thus, with the edge-lit backlight unit 10, the light guide plate 1 is made of polymethyl methacrylate. The inclination angle $\theta$ of the first inclined face 1B and the second inclined face 1C with respect to the light incident face 1A at one end of the light guide plate 1 is set to be greater than 42°, which is the critical angle of the optical refractive index of polymethyl methacrylate, and to be less than 46°. It is particularly favorable for the inclination angle $\theta$ of the first inclined face 1B and the second inclined face 1C to be set to 45°.

With the liquid crystal module, the liquid crystal panel 7 is disposed on the light emitting face 1D of the light guide plate 1 of the edge-lit backlight unit 10, with the optical sheets 6 in between.

As shown in FIG. 1, with this edge-lit backlight unit 10, the inclination angle of the first inclined face 1B and the second inclined face 1C with respect to the light incident face 1A of the light guide plate 1 is set to be $\theta$ degree, all of the light L1 that is incident from the light incident face 1A of the light guide plate 1 and that moves linearly and parallel to the light emitting face 1D is reflected by the first inclined face 1B, and then all of this reflected light L2 is reflected by the second inclined face 1C so that reflected light L3 is returned to the light guide plate 1. In this case, the incidence angle a and the reflection angle b of the light L1 on the first inclined face 1B are equal, and both angles a and b are 8 degree. Furthermore, the angle c and the angle e are equal, and both angles c and e are (90° - $\theta$). Moreover, the angle d is 2(90° - $\theta$), the angle f is 3$\theta$ - 90°, and the incidence angle g and the reflection angle h of the reflected light L2 on the second inclined face 1C are equal, and both angles are 180° - 3$\theta$.

For all of the incident light L1 to be reflected by the first inclined face 1B, it is essential that the incidence angle a be greater than the critical angle $\theta c$ of light refraction for the resin material that makes up the light guide plate 1. Furthermore, for all of the reflected light L2 to be reflected by the second inclined face 1C, it is essential that the incidence angle g be greater than the critical angle $\theta c$. Since the incidence angle a is equal to the inclination angle $\theta$, and the incidence angle g is 180° - 3$\theta$, it is essential that the critical angle $\theta c$ < inclination angle $\theta$, and that the critical angle $\theta c$ < 180° - 3$\theta$. Therefore, this gives the following inequality:

$$\text{critical angle } \theta c < \text{inclination angle } \theta < (180° - \text{critical angle } \theta c)/3.$$

With the edge-lit backlight unit 10, the inclination angle $\theta$ of the first inclined face 1B and the second inclined face 1C with respect to the light incident face 1A of the light guide plate 1 is set to be greater than the critical angle $\theta c$ of light refraction for the resin material that makes up the light guide plate 1, and to be less than (180° - critical angle $\theta c$)/3. Since the above inequality is satisfied, the incident light L1 can be reflected by the first inclined face 1B and the second inclined face 1C and returned to the light guide plate 1. Therefore, even though no light reflecting tape is affixed to the other end face opposite the light incident face 1A of the light guide plate 1 as in the past, the majority of the incident light can be emitted from the light emitting face 1D of the light guide plate 1. Thus, the light utilization efficiency becomes higher, and furthermore, there is no cost of light reflecting tape or labor cost of affixing the light reflecting tape. Accordingly, the cost of the product can be reduced.

Part of the light incident from the light incident face 1A of the light guide plate 1 is reflected and scattered by the lower face or the light emitting face 1D of the light guide plate 1, and reaches the first inclined face 1B and the second inclined face 1C. Thus, the majority of this light is emitted to the outside after being incident on the first inclined face 1B and the second inclined face 1C at an angle that is less than the critical angle $\theta c$. Therefore, the amount of light that can actually be returned to the light guide plate 1 is about 20 to 25% of the amount of incident light.

Also, when the light guide plate 1 is made of polymethyl methacrylate, the critical angle θc is 42°. Therefore, if the inclination angle θ of the first inclined face 1B and the second inclined face 1C is set to be greater than 42° and less than 46° so as to satisfy the above inequality, then part of the incident light can be reflected by the first inclined face 1B and the second inclined face 1C and returned to the light guide plate 1, which raises the light utilization efficiency. The effect is particularly pronounced when the inclination angle θ is set to 45°.

With the liquid crystal module, the liquid crystal panel 7 is disposed via the optical sheets 6 on the light emitting face 1D of the light guide plate 1 of the edge-lit backlight unit 10. The brightness of the display face of the liquid crystal panel 7 can be enhanced by the edge-lit backlight unit 10.

With the liquid crystal module, the first and second inclined faces 1B and 1C have the same inclination angle θ relative to the light incident face 1A of the light guide plate 1. However, the first and second inclined faces 1B and 1C can have different inclination angles relative to the light incident face 1A of the light guide plate 1 as long as the first and second inclined faces 1B and 1C are configured such that the first and second total internal reflections occur. In this case, the ridge formed by the interface of the first and second inclined faces 1B and 1C can be offset relative to the thickness center of the light guide plate 1.

GENERAL INTERPRETATION OF TERMS

In understanding the scope of the present invention, the term "comprising" and its derivatives, as used herein, are intended to be open ended terms that specify the presence of the stated features, elements, components and groups, but do not exclude the presence of other unstated features, elements, components and groups. The foregoing also applies to words having similar meanings such as the terms, "including", "having" and their derivatives. Also, the terms "part," "section," "portion," "member" or "element" when used in the singular can have the dual meaning of a single part or a plurality of parts.

While a preferred embodiment has been chosen to illustrate the present invention, it will be apparent to those skilled in the art from these disclosures that various changes and modifications can be made herein without departing from the scope of the invention as defined in the appended claims. Furthermore, the foregoing descriptions of the preferred embodiment according to the present invention are provided for illustration only, and not for the purpose of limiting the invention as defined by the appended claims and their equivalents.

**Claims**

**1.**  A backlight unit comprising:

a light source unit configured to emit light; and
a light guide plate arranged relative to the light source unit, the light guide plate including a first end surface and a second end surface that is opposite the first end surface, the first end surface facing with the light source unit, the second end surface having first and second inclined faces, the first inclined face sloping away from the second inclined face as approaching the first end surface of the light guide plate, the second inclined face sloping away from the first inclined face as approaching the first end surface of the light guide plate, the first and second inclined faces being arranged relative to the first end surface of the light guide plate such that a first total internal reflection of the light that is incident from the light source unit onto one of the first and second inclined faces is configured to occur at the one of the first and second inclined faces, and such that a second total internal reflection of the light that is reflected at the one of the first and second inclined faces and is incident onto the other of the first and second inclined faces is configured to occur at the other of the first and second inclined faces.

**2.**  The backlight unit according to claim 1, wherein
the first and second inclined faces of the second end surface of the light guide plate are arranged relative to the first end surface of the light guide plate such that the following is satisfied:

$$\theta c < \theta < (180° - \theta c)/3$$

wherein θ is an inclination angle of the first and second inclined faces of the second end surface of the light guide plate relative to the first end surface of the light guide plate, and θc is a critical angle for a material of which the light guide plate is made.

3. The backlight unit according to claim 2, wherein
the light guide plate is made of polymethyl methacrylate, the inclination angle of the first and second inclined faces of the second end surface of the light guide plate relative to the first end surface of the light guide plate being greater than 42° and less than 46°.

4. The backlight unit according to claim 3, wherein
the inclination angle of the first and second inclined faces of the second end surface of the light guide plate relative to the first end surface of the light guide plate is 45°.

5. The backlight unit according to any of claims 1 to 4, wherein
the light source unit has a wiring board and a plurality of light source elements that is disposed on the wiring board, the light source elements being arranged along the first end surface of the light guide plate.

6. The backlight unit according to any of claims 1 to 5, wherein
the second end surface of the light guide plate has a peaked cross sectional shape that protrudes away from the first end surface of the light guide plate.

7. The backlight unit according to any of claims 1 to 6, wherein
the second end surface of the light guide plate has a ridge that extends in a first direction of the light guide plate, the ridge being formed by an interface of the first and second inclined faces of the second end surface of the light guide plate.

8. The backlight unit according to any of claims 1 to 7, further comprising a rear frame housing the light source unit and the light guide plate in an interior of the rear frame.

9. A liquid crystal module comprising:

the backlight unit according to any of claims 1 to 8;
a liquid crystal panel disposed forward of liquid crystal module relative to the light guide plate; and
an optical sheet disposed between the light guide plate and the liquid crystal panel.

angle a = angle b = θ

angle c = angle e = (90° - θ)

angle d = 2 (90° - θ)

angle f = 180° - 3 (90° - θ) = (3 θ - 90°)

angle g = angle h = 90° - (3 θ - 90°) = (180° - 3 θ)

## FIG. 1

## FIG. 2

*FIG. 3*

Europäisches Patentamt

European Patent Office

Office européen des brevets

## EUROPEAN SEARCH REPORT

Application Number

EP 12 16 7210

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2010/220261 A1 (MIZUSHIMA TETSURO [JP] ET AL) 2 September 2010 (2010-09-02) <br> * paragraphs [0166], [0167], [0028]; figures 10a, 10b * | 1-9 | INV. <br> G02B6/00 |
| X | WO 2006/082444 A2 (CAMBRIDGE FLAT PROJECTION DISP [GB]; TRAVIS ADRIAN ROBERT LEIGH [GB]) 10 August 2006 (2006-08-10) <br> * abstract; figure 4 * | 1 | |
| X | WO 01/61241 A1 (3M INNOVATIVE PROPERTIES CO [US]) 23 August 2001 (2001-08-23) <br> * abstract; figure 7 * | 1 | |
| X | US 2011/044579 A1 (TRAVIS ADRIAN [US] ET AL) 24 February 2011 (2011-02-24) <br> * figures 3,5 * | 1 | |
| X | US 2001/012157 A1 (SUZUKI SHINGO [JP] ET AL) 9 August 2001 (2001-08-09) <br> * figure 6 * | 1 | TECHNICAL FIELDS SEARCHED (IPC) <br><br> G02B |

The present search report has been drawn up for all claims

| Place of search | Date of completion of the search | Examiner |
|---|---|---|
| Munich | 25 September 2012 | Jones, Julian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                    EP 12 16 7210

This annex lists the patent family members relating to the patent documents cited in the above-mentioned European search report.
The members are as contained in the European Patent Office EDP file on
The European Patent Office is in no way liable for these particulars which are merely given for the purpose of information.

25-09-2012

| Patent document cited in search report | | | Publication date | Patent family member(s) | | | Publication date |
|---|---|---|---|---|---|---|---|
| US 2010220261 | A1 | | 02-09-2010 | CN | 101346582 | A | 14-01-2009 |
| | | | | JP | 4881321 | B2 | 22-02-2012 |
| | | | | US | 2010220261 | A1 | 02-09-2010 |
| | | | | WO | 2007074787 | A1 | 05-07-2007 |
| WO 2006082444 | A2 | | 10-08-2006 | CN | 101116020 | A | 30-01-2008 |
| | | | | EP | 1851575 | A2 | 07-11-2007 |
| | | | | JP | 4903162 | B2 | 28-03-2012 |
| | | | | JP | 2008529251 | A | 31-07-2008 |
| | | | | KR | 20070108510 | A | 12-11-2007 |
| | | | | US | 2008316768 | A1 | 25-12-2008 |
| | | | | WO | 2006082444 | A2 | 10-08-2006 |
| WO 0161241 | A1 | | 23-08-2001 | AU | 3277301 | A | 27-08-2001 |
| | | | | CN | 1401066 | A | 05-03-2003 |
| | | | | EP | 1257767 | A1 | 20-11-2002 |
| | | | | JP | 2003523536 | A | 05-08-2003 |
| | | | | US | 6347874 | B1 | 19-02-2002 |
| | | | | US | 6379016 | B1 | 30-04-2002 |
| | | | | WO | 0161241 | A1 | 23-08-2001 |
| US 2011044579 | A1 | | 24-02-2011 | CA | 2768068 | A1 | 24-02-2011 |
| | | | | CN | 102483522 | A | 30-05-2012 |
| | | | | EP | 2467749 | A2 | 27-06-2012 |
| | | | | KR | 20120049890 | A | 17-05-2012 |
| | | | | US | 2011044579 | A1 | 24-02-2011 |
| | | | | US | 2011044582 | A1 | 24-02-2011 |
| | | | | US | 2011228562 | A1 | 22-09-2011 |
| | | | | US | 2012206937 | A1 | 16-08-2012 |
| | | | | WO | 2011022625 | A2 | 24-02-2011 |
| US 2001012157 | A1 | | 09-08-2001 | JP | 2001222905 | A | 17-08-2001 |
| | | | | US | 2001012157 | A1 | 09-08-2001 |

EPO FORM P0459

For more details about this annex : see Official Journal of the European Patent Office, No. 12/82

**REFERENCES CITED IN THE DESCRIPTION**

**Patent documents cited in the description**

- JP 2011105621 A
- JP 2007200741 A
- JP 2003315560 A
- JP 2003156632 A